# EUROPEAN PATENT SPECIFICATION

(11) **EP 1 374 204 B1**
(45) Date of publication and mention of the grant of the patent: **03.08.2005**
(21) Application number: 02702975.0
(22) Date of filing: 07.03.2002
(51) Int. Cl.: G08G 1/127, G07B 15/00

(54) **SYSTEM AND METHOD FOR RECORDING THE ROUTE OF A VEHICLE USING A MOBILE TELEPHONE**
SYSTEM UND VERFAHREN FÜR DIE REGISTRIERUNG EINER ROUTE EINES FAHRZEUGS MIT EINEM MOBILTELEFON
SYSTEME ET PROCEDE PERMETTANT D'ENREGISTRER L'ITINERAIRE D'UN VEHICULE A L'AIDE D'UN TELEPHONE MOBILE

(30) Priority: 07.03.2001 NL 1017529
(43) Date of publication of application: 02.01.2004
(73) Proprietor: Xello Beheer B.V., 4161 CL Heukelum (NL)
(72) Inventor: VAN DER TEMPEL, Leendert, Harmen, NL-4161 CL Heukelum (NL)
(74) Representative: van Westenbrugge, Andries
(86) International application number: PCT/NL2002/000154
(87) International publication number: WO 2002/071366

(56) References cited:
- EP-A- 0 323 326
- WO-A-00/67207
- WO-A-96/22202
- US-A- 5 874 889
- US-A- 5 970 481
- US-A- 6 016 349

## Description

The present invention relates to a route recording system and a method for recording and charging for a route travelled by a vehicle.

An example of a route recording system is disclosed in the patent application EP-A 745 959, in which a system is described that records and monitors the activities of a lorry. The data that are transmitted by a mobile terminal are processed in the central recording system used in this system, after which any new work instructions are transmitted to the mobile terminal. The mobile terminal is fitted in a lorry so that the driver can read and carry out the work instructions. Data with regard to any toll roads to be travelled can also be recorded. Tolls are paid either by the driver stopping at a tollbooth and paying or by automatic payment via conventional systems. This system is merely for recording activities of a lorry. The central recording system is not equipped to charge the drivers the costs for (toll) roads travelled or the route travelled. The system also does not eliminate the need to install tollbooths.

In order to reduce road traffic on the congesting road network a few national governments have decided to introduce so-called road-pricing charging. For this purpose a detection system is installed in multiple locations above the road so that it is possible to record the vehicles that drive under the detection system. Because the detection system is often fixed to metal constructions that are installed above the road, these are also referred to as tollbooths.

In order to be able to detect a vehicle, the latter contains a detection module which usually is positioned close to the windscreen. The owner of the vehicle must, for example, provide the detection module with a smart card that has been electronically loaded beforehand with a certain sum of money. If a vehicle fitted with a detection module passes through a tollbooth a certain predefined sum of money is deducted from the smart card. If the balance on the smart card is too low, debiting will not be possible. In this case a number-plate registration system will come into effect that optically records the number-plate of the vehicle that has passed through the tollbooth and stores this in a database. This database will be regularly transferred to an administrative system managed by an authorised agency so that summonses can be despatched to the owners of vehicles which has passed through a tollbooth without paying. If a vehicle is not provided with a detection module, the number-plate will likewise be optically recorded and a summons will be despatched to the owner of the vehicle.

The system for congestion charging that has been described above is associated with a number of major disadvantages. In practice it has been found that optical recording of number-plates is not perfect. Many a vehicle is able to go undetected. In particular, vehicles that travel close behind one another have a chance of escaping number-plate recording. In addition there are road users who apply a lacquer coating to the number-plate in order to make optical recording more difficult. Dirty number-plates also literally cloud the issue.

A national government has to determine where the tollbooths are to be positioned. Frequently the choice is for motorways that are overloaded. In this case the tollbooths are positioned at the boundary of a major town so that the traffic that drives into that town is reliably recorded. Traffic that drives into the town via another route will thus not be charged. It should be clear that positioning of tollbooths is a tricky matter. This road-pricing system will operate honestly and efficiently only after innumerable tollbooths have been put in place. This incurs the necessary costs and contributes to visual pollution.

A route recording system, as described by the preamble of the accompanying claim 1 is known from American patent US-A-5 970 481. The route recording system comprises a central recording system to which information is sent concerning a route driven by a vehicle. A user of a vehicle is charged by for example an authority for the routes he or she has travelled during a specific period. In the system described by US-A-5 970 481, no arrangements are disclosed to protect such a system against fraud.

It is an object of the present invention to provide a route recording system as described above which is arranged to decrease the possibility of fraud.

This object is achieved by a route recording system with the features mentioned in claim 1.

In a first embodiment the first communication means are equipped to transmit the information to the at least one central recording system via a service provider's charge line, the costs being charged by the service provider to the user of the at least one communication device. Because a service provider already has an infrastructure by means of which costs incurred can be charged to a user of a communication device, this embodiment is relatively easy to implement.

Preferably, the communication device comprises second communication means for conventional communication. The communication device can now also be used as a mobile telephone. This mobile telephone can thus be used both for mobile communication and for transmitting information for the route recording system.

The present invention also relates to a communication device equipped for use in a route recording system as described above.

Furthermore, the invention relates to a method according to claim 11.

Further advantages and characteristics of the present invention will become clear on the basis of a description of a number of embodiments, in which context reference is made to the appended drawings, in which:
Fig. 1a shows, diagrammatically, a communication device for one embodiment with integral modules,
Fig. 1b shows, diagrammatically, a communication device for another embodiment with integral modules,
Fig. 2 shows a route that a vehicle travels between two points in time, the position of the vehicle being determined at the two points in time by GPS satellites.
Fig. 3 shows a route as in Figure 2, showing the communication between a mobile telephone in a vehicle and the central recording system.
Fig. 4 shows an embodiment of the link between a mobile telephone and a vehicle immobiliser system,
Fig. 5 shows a diagram of a system for possible payment for the routes travelled.

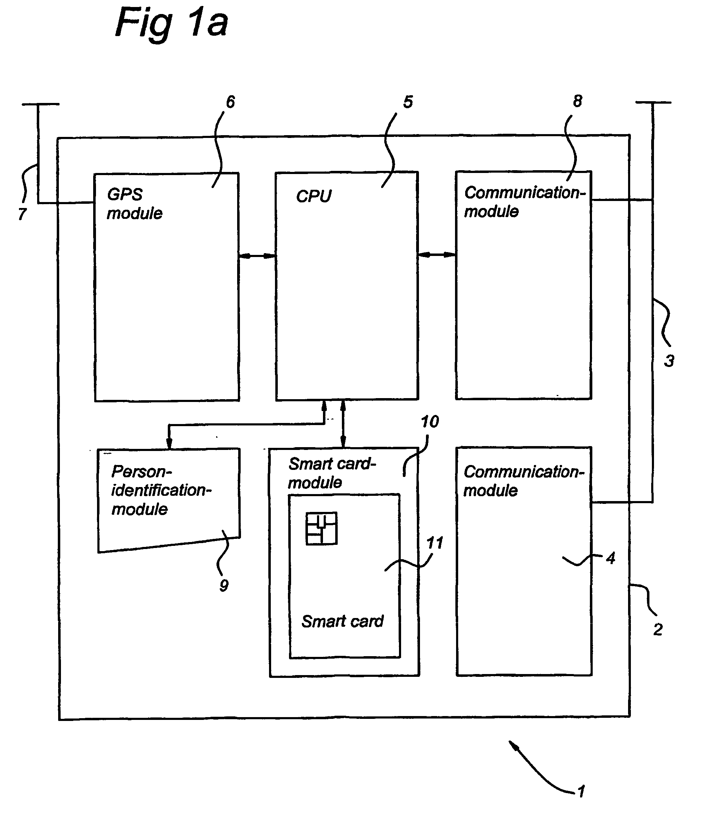

In the following description the communication device is represented as a mobile telephone. Fig. 1a shows a first embodiment as used in the invention. The mobile telephone 1 comprises a case 2 and an aerial 3. The aerial 3 is connected to a communication module 4 for conventional communication such as, for example, voice and SMS messages. The mobile telephone 1 also has a central processing unit (CPU) 5 that is connected to a GPS module 6. Said GPS module 6 is connected to an aerial 7. Aerial 3 and aerial 7 can be the same. The CPU 5 is also connected to a communication module 8. Communication modules 4 and 8 can be the same if desired. In addition, mobile telephone 1 has a person identification module 9 that is connected to the CPU 5. Unique personal characteristics can be determined or recorded by the person identification module 9. This module can be implemented as a fingerprint or iris recognition system, or another biometric system.

Mobile telephone 1 also has a smart card module 10 that is connected to the CPU 5. The smart card module 10 contains a removable smart card 11.

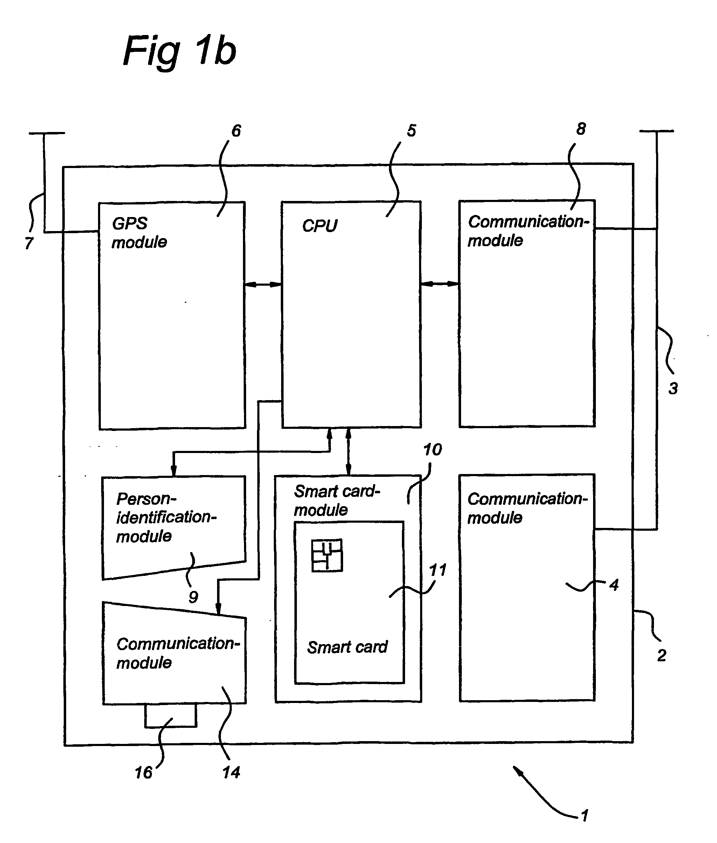

Figure 1b shows a second embodiment as used in the invention. In this case the mobile telephone 1 has a number of modules as shown in Figure 1a. In addition the mobile telephone 1 has a communication module 14 and connection means 16, such as a connector.

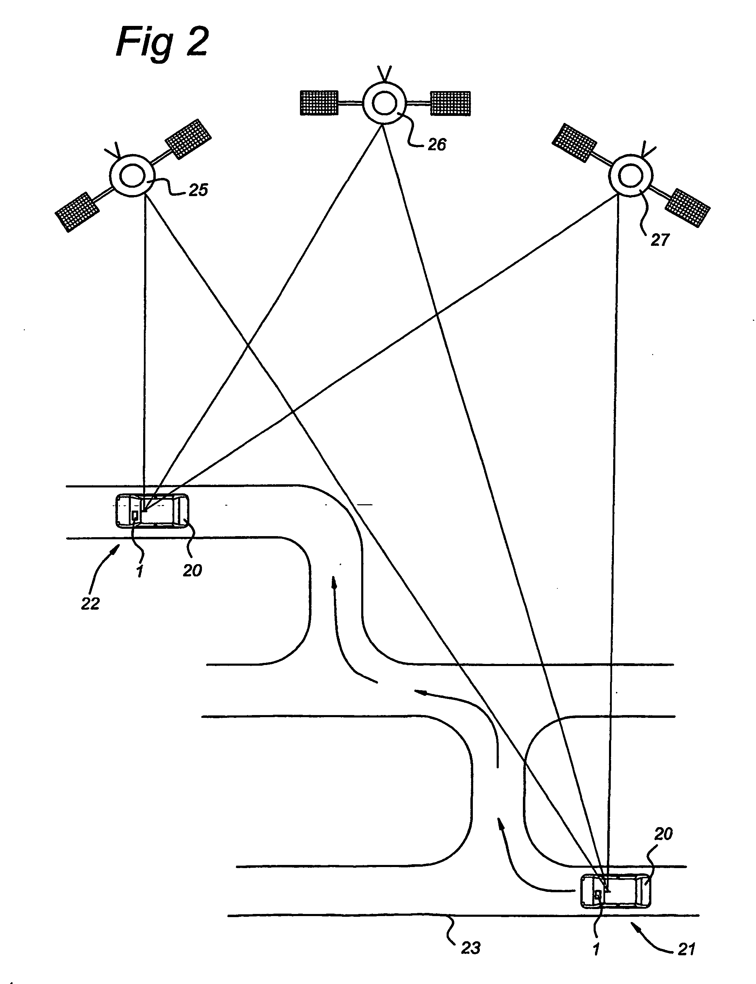

Figure 2 shows a vehicle 20 that at time A is in position 21 on a road network 23. At a later time B vehicle 20 is in position 22 on said road network 23. The mobile telephone 1 is in vehicle 20. Figure 2 also shows a number of satellites 25, 26, 27 which form part of the worldwide GPS system and orbit the earth.

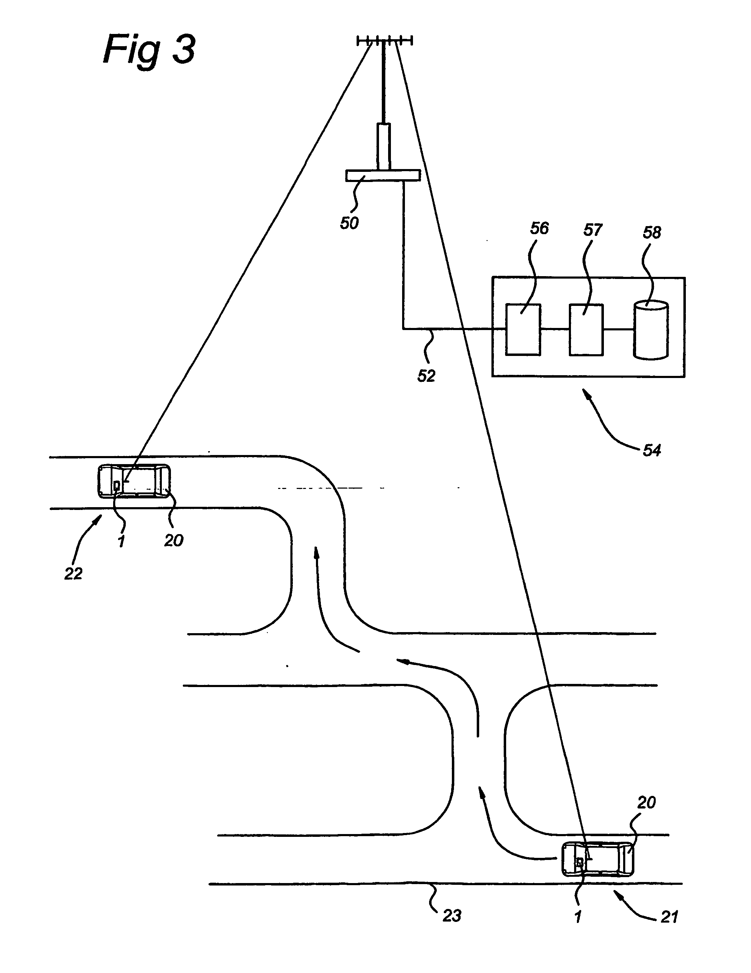

Figure 3 shows the vehicle 20 on the road network 23 as can also be seen in Figure 2. In addition, a telephone receiver 50 is shown that is connected via electronic connecting means 52 to communication means 56 of a central recording system 54. In addition to the communication means 56, the central recording system 54 also contains, inter alia, a central processing unit (CPU) 57 and data storage means 58. Both the communication means 56 and the storage means 58 are connected to the CPU 57.

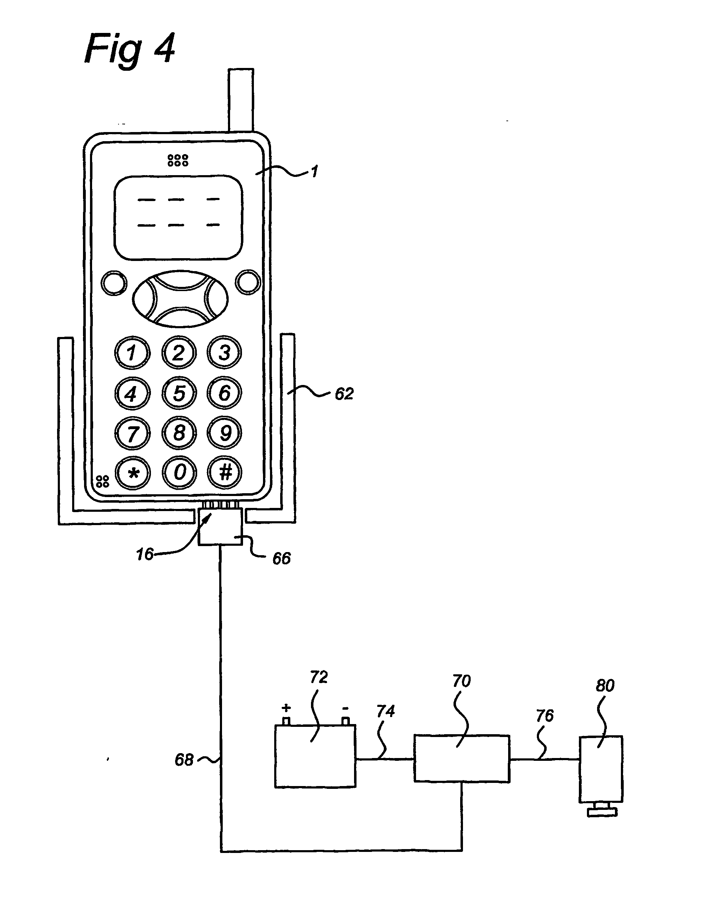

Figure 4 shows an embodiment of the link between the mobile telephone 1 and an immobiliser system 70 where the mobile telephone 1, which has connection means 16, is in a holder 62. The holder 62 has connection means 66. These are connected to connection means 68, such as an electric cable, which at the other end are connected to an immobiliser system 70. The immobiliser system 70 is connected via connection means 74 to a power supply 72, such as a battery. The immobiliser system 70 is also connected by connection means 76 to starter means 80, such as a starter motor, of a vehicle.

If the vehicle 20 is started at time A, where the vehicle 20 and the mobile telephone 1 are in position 21 on the road network 23, the communication means 8 make contact, via, for example, a charge line, with the central recording system 54 and the position PA calculated by the GPS module 6, is transmitted to the CPU 5, after which these data are transmitted by the communication means 8 to the central recording system 54. The link is disconnected after the data have been transmitted. In order to be able to calculate the position PA, GPS module 6 makes contact via the aerial 7 with the satellites 25, 26, 27.

In one embodiment of the invention communication module 8 of mobile telephone 1 provides for regular telephone contact with the central recording system. Telephone contact is effected by means of the so-called 'polling' technique, where the mobile telephone 1 regularly 'polls' the central recording system in order thus to be able to transmit information. With this system contact is reported, but no phone is actually "picked up" on the part of the central recording system, so that this communication does not have to cost any telephone units. Furthermore, the polling technique has the advantage that the occupancy of a communications network is appreciably lower and thus more efficient.

After a certain period (at time B) the communication means 8 will thus again make contact with the central recording system 54. The vehicle 20 is now in position 22 on the road network 23. The position PB will be transmitted via the polling technique to the central recording system 54. In this way the position of vehicle 20 is regularly recorded by the central recording system 54. The data in the data storage system 58 can be used by an authorised agency in order, with the aid of a geographical information system (GIS) and a route charging system, to charge the owners of the mobile telephones.

To prevent fraudulent use of this system, the telephone 1 is provided with a smart card 11 that can be introduced into the smart card module 10. The smart card 11 contains personal data of the owner of the smart card 11.

In order to prevent unauthorised use of the smart card, the mobile telephone 1 is provided with the person identification module 9. If the person identification determined by the person identification module 9 *does not* correspond to the identification data on the smart card it will be possible for the vehicle to travel on the road network without authorisation. In order to prevent this, the immobiliser system 70 of the vehicle 20 is deactivated only after a signal that is initiated by the CPU 5 of mobile telephone 1. The signal can, for example, be transmitted via communication module 8. In a second embodiment of the mobile telephone 1, as shown in Figure 1b, the latter contains the communication module 14 connected to connection means 16. The mobile telephone 1 must be placed in the holder 62 so that the connection means 16, can be coupled to connection means 66. Via a connection 68 it is now possible to communicate with immobiliser system 70. Deactivation of the immobiliser system makes it possible to activate the starter motor 80.

Instead of by GPS, the location can also, for example, be established using HLR/VLR (home location register/visitor location register) of the mobile telephone network in operation.

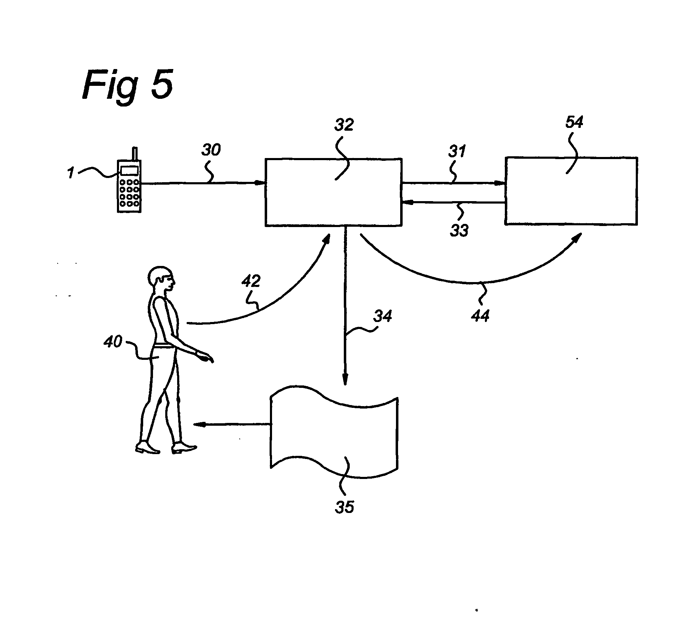

The communication between a user 40 and the central recording system 54 of one embodiment of the invention is shown in Figure 5. The communication device 1 transmits information with regard to the position of the vehicle 20 to the central recording system 54, for example by means of the polling technique. In this embodiment the information is transmitted via a charge line 30, 31. This charge line 30, 31 is maintained by a service provider. In Figure 5 the service provider's system is indicated diagrammatically by block 32. If the central recording system 54 has received the information, the system converts this into costs. These costs are preferably charged to a user 40 of the communication device 1 via the service provider. This is effected, for example, in that the administrator of the central recording system 54, for example a government agency, calculates the costs to the service provider, in the same way as excise duty payments are made, plus the service provider's tariff, where appropriate combined with the service provider's tariffs for other mobile services, see arrow 33, after which the service provider charges the user 40 with the total costs, see arrow 34, and sends a bill 35 to the user 40. The bill 35 lists the costs for the charged routes travelled in a specific period. The user 40 will then pay the costs to the service provider, see 42, after which the service provider pays the costs to the administrator of the central recording system 54, see 44.

As a further alternative it is conceivable that the system of the service provider 32, which in general will comprise a computer suitable for this purpose, is able to communicate with a computer system of a bank (not shown) where the user 40 has a bank account. It is then possible, if desired, for payment of this bill to take place automatically or by means of direct debit. Systems of this type for automatic payment via a bank account that is administered by a bank computer system are adequately known and require no further explanation here.

The invention is certainly not restricted to the abovementioned embodiments. It will be clear to a person skilled in the art that in addition to the abovementioned polling technique it is also possible for conventional telephone contact to take place in order to transmit the requisite information from the communication device to the central recording system.

As has already been mentioned above, the invention can be used to implement a variable mobility tax for vehicles. The administrator of the central recording system can process the recorded information with the aid of various tax models. It is, for example, conceivable that certain times and/or areas will be more highly taxed than others, or that certain vehicle users pay more than others. It is also possible that a so-called "volume user" is given a sort of quantity discount. A further advantage of the invention is the possibility for the administrator of the system to collect data for possible mobility research. Using data, which may or may not be depersonalised, from the central recording system, mobility issues can be examined by an agency authorised for this purpose. This will certainly be beneficial for solving the current mobility problems on the road and possibly in future in the air or possibly even in space.

## Claims

1. Route recording system, comprising at least one central recording system (54) and at least one communication device (1), the communication device (1) comprising, for recording a route travelled by a vehicle (20):
• first communication means (8) for transmitting information to the at least one central recording system (54), and
• a positioning module (6),
and the at least one communication device (1) being equipped to transmit the position calculated by the positioning module (6) via the first communication means (8) to the at least one central recording system (54) at specific points in time, wherein the at least one central recording system (54) is equipped to convert the information with regard to a route travelled into costs which can be charged to a user of the at least one communication device (1), **characterised in that** the communication device (1) is equipped to transmit signals to an immobiliser system (70) of the vehicle (20).

2. Route recording system according to Claim 1, **characterised in that** the first communication means (8) are equipped to transmit the information to the at least one central recording system (54) via a service provider's charge line (30, 31), the costs being charged by the service provider to the user of the at least one communication device (1).

3. Route recording system according to Claim 1 or 2, **characterised in that** the communication device (1) comprises second communication means (4) for conventional communication.

4. Route recording system according to one of the preceding claims, **characterised in that** the communication device (1) is equipped to accommodate a smart card (11) holding personal data of the owner.

5. Route recording system according to Claim 4, **characterised in that** a person identification system (9) is connected to the communication device (1) for person identification, wherein the personal data contained in the smart card (11) are compared with personal data determined by the person identification system (9).

6. Route recording system according to Claim 5, **characterised in that** the person identification system (9) is a biometric scanner.

7. Route recording system according to Claim 6, **characterised in that** the biometric scanner is an iris scanner or a fingerprint scanner.

8. Route recording system according to Claim 1, depending on Claim 5, **characterised in that** the immobiliser system (70) is deactivated by the communication device (1) only if the personal data on the smart card (11) and the data determined by the person identification system (9) correspond.

9. Route recording system according to one of the preceding claims, **characterised in that** the first communication means (8) are equipped to transmit the information to the at least one central recording system (54) by means of a polling technique.

10. Communication device (1) equipped for use in a route recording system according to one of the preceding claims.

11. Method for recording and charging for a route travelled by a vehicle, to be carried out by a route recording system as described in one of Claims 1 - 9, **characterised in that** the method comprises the following steps:
- transmission of positional information at specific points in time from a communication device (1) on board the vehicle;
- receipt of this information by the central recording system (54);
- conversion of this information into costs;
- charging the user for the costs.

## Patentansprüche

1. Wegstreckenaufzeichnungssystem, welches wenigstens ein zentrales Aufzeichnungssystem (54) und wenigstens eine Kommunikationsvorrichtung (1) umfasst, wobei die Kommunikationsvorrichtung (1) zur Aufzeichnung einer von einem Fahrzeug (20) befahrenen Wegstrecke umfasst:
- ein erstes Kommunikationsmittel (8) zur Übertragung von Information zu dem wenigstens einen zentralen Aufzeichnungssystem (54) und
- ein Positionierungsmodul (6),
und wobei die wenigstens eine Kommunikationsvorrichtung (1) derart ausgestattet ist, dass sie die durch das Positionierungsmodul (6) berechnete Position über das erste Kommunikationsmittel (8) zu dem wenigstens einen zentralen Aufzeichnungssystem (54) zu spezifischen Zeitpunkten überträgt, wobei das wenigstens eine zentrale Aufzeichnungssystem (54) derart ausgestattet ist, dass es die Information mit Bezug auf eine befahrene Wegstrecke in Kosten umwandelt, welche einem Nutzer der wenigstens einen Kommunikationsvorrichtung (1) berechnet werden können, **dadurch gekennzeichnet, dass** die Kommunikationsvorrichtung (1) derart ausgestattet ist, dass sie Signale zu einem Feststellungssystem (70) des Fahrzeugs (20) überträgt.

2. Wegstreckenaufzeichnungssystem nach Anspruch 1, **dadurch gekennzeichnet, dass** das erste Kommunikationsmittel (8) derart ausgestattet ist, dass es die Information zu dem wenigstens einen zentralen Aufzeichnungssystem (54) über eine Berechnungsleitung (30,31) eines Leistungsanbieters überträgt, wobei die Kosten dem Nutzer der wenigstens einen Kommunikationsvorrichtung (1) durch den Leistungsanbieter berechnet werden.

3. Wegstreckenaufzeichnungssystem nach Anspruch 1 oder 2, **dadurch gekennzeichnet, dass** die Kommunikationsvorrichtung (1) ein zweites Kommunikationsmittel (4) für eine herkömmliche Kommunikation umfasst.

4. Wegstreckenaufzeichnungssystem nach einem der vorhergehenden Ansprüche, **dadurch gekennzeichnet, dass** die Kommunikationsvorrichtung (1) derart ausgestattet ist, dass sie eine Smart Card (11) aufnimmt, welche persönliche Daten des Inhabers enthält.

5. Wegstreckenaufzeichnungssystem nach Anspruch 4, **dadurch gekennzeichnet, dass** ein Personenidentifizierungssystem (9) mit der Kommunikationsvorrichtung (1) für eine Personenidentifizierung verbunden ist, wobei die in der Smart Card (11) enthaltenen persönlichen Daten mit den persönlichen Daten verglichen werden, welche durch das Personenidentifizierungssystem (9) bestimmt werden.

6. Wegstreckenaufzeichnungssystem nach Anspruch 5, **dadurch gekennzeichnet, dass** das Personenidentifizierungssystem (9) ein biometrischer Scanner ist.

7. Wegstreckenaufzeichnungssystem nach Anspruch 6, **dadurch gekennzeichnet, dass** der biometrische Scanner ein Iris-Scanner oder ein Fingerabdruck-Scanner ist.

8. Wegstreckenaufzeichnungssystem nach Anspruch 1, abhängig von Anspruch 5, **dadurch gekennzeichnet, dass** das Feststellungssystem (70) nur dann durch die Kommunikationsvorrichtung (1) deaktiviert wird, wenn sich die persönlichen Daten auf der Smart Card (11) und die Daten, welche durch das Personenidentifizierungssystem (9) bestimmt werden, entsprechen.

9. Wegstreckenaufzeichnungssystem nach einem der vorhergehenden Ansprüche, **dadurch gekennzeichnet, dass** das erste Kommunikationsmittel (8) derart ausgestattet ist, dass es die Information zu dem wenigstens einen zentralen Aufzeichnungssystem (54) mittels einer Sendeabruf-Methode überträgt.

10. Kommunikationsvorrichtung (1), welche für eine Verwendung in einem Wegstreckenaufzeichnungssystem nach einem der vorhergehenden Ansprüche ausgestattet ist.

11. Verfahren zum Aufzeichnen und Berechnen einer von einem Fahrzeug befahrenen Wegstrecke, welches durch ein Wegstreckenaufzeichnungssystem, wie es in einem der Ansprüche 1 bis 9 beschrieben ist, auszuführen ist, **dadurch gekennzeichnet, dass** das Verfahren die folgenden Schritte umfasst:
- Übertragung von Positionsinformation zu spezifischen Zeitpunkten von einer Kommunikationsvorrichtung (1) an Bord des Fahrzeugs;
- Empfang dieser Information durch das zentrale Aufzeichnungssystem (54);
- Umwandlung dieser Information in Kosten;
- Belastung des Nutzers mit den Kosten.

## Revendications

1. Système d'enregistrement d'itinéraire, comprenant au moins un système d'enregistrement central (54) et au moins un dispositif de communication (1) comportant, pour enregistrer un itinéraire parcouru par un véhicule (20) :
• des premiers moyens de communication (8) pour transmettre de l'information au système d'enregistrement central (54), et
• un module de positionnement (6),
et le dispositif de communication (1) étant équipé pour transmettre la position calculée par le module de positionnement (6) par l'intermédiaire des premiers moyens de communication (8) au système d'enregistrement central (54) à des moments spécifiques dans le temps, dans lequel le système d'enregistrement central (54) est équipé pour convertir l'information en rapport avec un itinéraire parcouru en coûts qui peuvent être imputés à un utilisateur du dispositif de communication (1), **caractérisé en ce que** le dispositif de communication (1) est équipé pour transmette des signaux à un système d'immobilisation (70) du véhicule (20).

2. Système d'enregistrement d'itinéraire selon la revendication 1, **caractérisé en ce que** les premiers moyens de communication (8) sont équipés pour transmettre l'information au système d'enregistrement central (54) par l'intermédiaire d'une ligne d'imputation du fournisseur de service (30, 31), les coûts étant imputés par le fournisseur de service à l'utilisateur du dispositif de communication (1).

3. Système d'enregistrement d'itinéraire selon la revendication 1 ou 2, **caractérisé en ce que** le dispositif de communication (1) comporte des seconds moyens de communication (4) pour une communication conventionnelle.

4. Système d'enregistrement d'itinéraire selon l'une des revendications précédentes, **caractérisé en ce que** le dispositif de communication (1) est équipé pour loger une carte à puce (11) détenant des données personnelles du propriétaire.

5. Système d'enregistrement d'itinéraire selon la revendication 4, **caractérisé en ce qu'**un système d'identification de personne (9) est connecté au dispositif de communication (1) pour l'identification de personne, dans lequel les données personnelles contenues dans la carte à puce (11) sont comparées avec les données personnelles déterminées par le système d'identification de personne (9).

6. Système d'enregistrement d'itinéraire selon la revendication 5, **caractérisé en ce que** le système d'identification de personne (9) est un scanner biométrique.

7. Système d'enregistrement d'itinéraire selon la revendication 6, **caractérisé en ce que** le scanner biométrique est un scanner de l'iris ou un scanner d'empreinte digitale.

8. Système d'enregistrement d'itinéraire selon la revendication 1, dépendant de la revendication 5, **caractérisé en ce que** le système d'immobilisation (70) est désactivé par le dispositif de communication (1) seulement si les données personnelles sur la carte à puce (11) et les données déterminées par le système d'identification de personne (9) correspondent.

9. Système d'enregistrement d'itinéraire selon l'une des revendications précédentes, **caractérisé en ce que** les premiers moyens de communication (8) sont équipés pour transmettre l'information au système d'enregistrement central (54) au moyen d'une technique d'interrogation.

10. Dispositif de communication (1) équipé pour une utilisation dans un système d'enregistrement d'itinéraire selon l'une des revendications précédentes.

11. Procédé pour enregistrer et imputer pour un itinéraire parcouru par un véhicule, devant être effectué par un système d'enregistrement d'itinéraire tel que décrit dans l'une des revendications 1 à 9, **caractérisé en ce que** le procédé comprend les étapes suivantes :
- transmission de l'information de position à des moments spécifiques dans le temps à partir d'un dispositif de communication (1) à bord du véhicule ;
- réception de cette information par le système d'enregistrement central (54) ;
- conversion de cette information en coûts ;
- imputation des coûts à l'utilisateur.
